# EUROPEAN PATENT SPECIFICATION

(11) **EP 0 401 502 B1**
(45) Date of publication and mention of the grant of the patent: **18.09.1996**
(21) Application number: 90107792.5
(22) Date of filing: 24.04.1990
(51) Int. Cl.: C08K 13/02, C08K 13/04, C08L 81/02

(54) **Glass-filled poly(arylene sulphide) compositions**
Glasgefüllte Polyarylensulfidmischungen
Compositions de poly(sulfine d'arylène) chargées de verre

(30) Priority: 05.06.1989 US 361547
(43) Date of publication of application: 12.12.1990
(73) Proprietor: PHILLIPS PETROLEUM COMPANY, Bartlesville Oklahoma 74004 (US)
(72) Inventor: Wright, Roy Franklin, Bartlesville, OK 74003 (US)
(74) Representative: Geissler, Bernhard, Dr.jur., Dipl.-Phys.

(56) References cited:
- EP-A- 388 971
- EP-A- 0 074 632
- EP-A- 0 302 648
- US-A- 4 176 098
- US-A- 4 337 182
- DATABASE WPIL, no. 87-233051, Derwent
- && JP-A-62158754 (TORAY IND INC) 14-07-1987

## Description

### Background Of The Invention

### 1. Field Of The Invention

This invention relates generally to glass-filled poly(arylene sulfide) compositions and methods of producing such compositions. More particularly, the present invention provides improved glass-filled poly(arylene sulfide) injection molding compositions which have improved mechanical and other properties.

### 2. Description of the Prior Art

Poly(arylene sulfide) resin is a chemical resistant, high temperature, thermoplastic resin which has many industrial applications and is the basic component in thermoplastic injection molding compositions having superior properties. Such compositions including poly(arylene sulfide) resins, glass fiber reinforcement materials and other components such as fillers, mold corrosion inhibitors, processing aids, and pigments have been utilized heretofore for injection molding a variety of products and parts.

Organosilanes have been utilized heretofore in glass-filled poly(arylene sulfide) compositions for a variety of purposes. For example, United States Patent No. 4,528,310 issued July 9, 1985 to Blackwell discloses the use of organosilanes for decreasing or increasing the melt flow rate of glass-filled poly(arylene sulfide). United States Patent No. 4,504,551 issued Mar. 12, 1985 to Leland discloses poly(arylene sulfide) compositions of increased insulation resistance which include at least one silane selected from a specifically defined group of polysulfide silanes. United States Patent No. 4,680,326 issued July 14, 1987 to Leland et al. discloses poly(arylene sulfide) compositions having good cracking resistance and eiectrical insulation resistance which include at least one organosilane containing an aminofunctional group. Glass-filled aromatic sulfide polymer mixtures which lead to molded products with improved mechanical properties are provided in EP 388,971. These mixtures contain aromatic sulfide polymers or aromatic sulfide or arylene sulfide polymers besides glass reinforcement materials and epoxysilane.

EP 0 302 648 suggests a molded article useful inelectrilcal parts. Polyarylene sulfide compositions containing organosilanes are disclosed in EP 0 074 632. These compositions show modified flow rate and hydrolytic stability.

Corrosion inhibitors to prevent corrosion of metallic molds used to form poly(arylene sulfide) molding compositions have also been utilized heretofore. Such corrosion inhibitors are generally necessary as a result of the corrosive nature of poly(arylene sulfide) resins. For example, United States Patent No. 4,529,769 issued July 16, 1985 to Johnson et al. discloses a molding composition containing poly(arylene sulfide) resin and a corrosion inhibitor, i.e., hydrotalcite. The hydrotalcite-containing poly(arylene sulfide) molding composition, which can optionally also contain an epoxysilane, has a reduced tendency to corrode molds and has acceptable electrical and mechanical properties in moist environments.

While glass-filled poly(arylene sulfide) molding compositions have been successfully utilized heretofore for a variety of applications, such prior art compositions have had relatively poor color and less than desirable combinations of mechanical strength, impact resistance, electrical insulation resistance and hydrolytic stability in certain applications. Generally, such applications involved exposure to high temperatures and require high strengths. Examples are automotive under-the-hood components, electrical components and parts, appliance components, pump housings, impellers and valves.

### Summary of the Invention

Improved glass-filled poly(arylene sulfide) compositions and methods of producing such compositions are provided which meet the needs described above in that they possess excellent strength, impact resistance, electrical insulation resistance, and hydrolytic stability over a broad temperature range. The compositions of the invention are basically comprised of poly(arylene sulfide), glass, at least one epoxysilane, an additional filler and hydrotalcite. Preferred epoxysilanes include 3-glycidoxypropyltrimethoxysilane, beta-(3,4-epoxycyclohexyl)-ethyltrimethoxysilane, 3-glycidoxypropylmethyldiethoxysilane, 2-glycidoxypropyltrimethoxysilane, and mixtures of such epoxysilanes.

The compositions generally contain the poly(arylene sulfide) component in an amount in the range of from 35% to 90 parts by weight of the compositions, glass in an amount in the range of from 10 to 65 parts weight, the epoxysilane in an amount in the range of from 0.1 to 2.0 by weight, the additional filler in an amount between 10 and 65 parts by weight and the hydrotalcite in an amount between 0.1 and 2 parts by weight.

The compositions are most preferably formed using a poly(arylene sulfide) having a low ash content, a high melt crystalization temperature and a melt flow in the range of from 50 to 800 grams per 10 minutes, most preferably from 50 to 200 grams per 10 minutes. The compositions also include a mold corrosion inhibitor such as hydrotalcite or lithium carbonate, preferably hydrotalcite, in an amount in the range of from 0.1 to 2.0 parts by weight of the composition. Other components such as pigments and processing aids can also be included.

A preferred method of preparing a molding composition of the present invention comprises the steps of mixing poly(arylene sulfide), glass hydrotalcite, additional filler and epoxysilane, melt-extruding the mixture and then cooling the mixture to form the molding composition.

It is, therefore, a general object of the present invention to provide glass-filled poly(arylene sulfide) compositions and methods.

A further object of the present invention is the provision of glass-filled poly(arylene sulfide) molding compositions having improved mechanical strength, impact resistance, electrical insulation resistance and other properties.

These and further objects, features and advantages of the present invention will be readily apparent to those skilled in the art upon a reading of the description of preferred embodiments which follows.

### Description of Preferred Embodiments

The present invention provides improved glass-filled poly(arylene sulfide) injection molding compositions and methods of preparing such compositions. The compositions exhibit improved mechanical strengths, impact resistance, electrical insulation resistance and hydrolytic stability over a broad temperature range.

Each composition of the invention is basically comprised of poly(arylene sulfide) in the form of a resin, glass as a reinforcing material, an additional filler hydrotalcite and at least one epoxysilane. The poly(arylene sulfide) resin is present in the composition in an amount in the range of from 35 to 90 parts by weight of the composition, preferably in the range of from 50% to 75 parts by weight, and most preferably in the range of from 55 to 65 parts by weight. The glass reinforcing material is present in the composition in an amount in the range of from 10 to 65 parts by weight of the composition, preferably from 25 to 50 parts by weight, and most preferably from 35 to 45 parts by weight. The epoxysilane is present in the composition in an amount in the range of from 0.1 to 2.0 parts by weight of the composition, preferably from 0.2 to 1.5 parts by weight, and most preferably from 0.4 to 1.0 parts by weight. In addition, the composition includes the corrosion inhibitor hydrotalcite in an amount in the range of from 0.1 to 2.0 parts by weight of the composition, and an additional filler in an amount btw. 10 and 65 parts by weight of the compositon, can also includes processing aids, e.g., polyethylene, and pigments.

Poly(arylene sulfide) resins which are particularly suitable for use in accordance with the present invention are those described in United States Patents Nos. 3,354,129 issued Nov. 21, 1967; 3,919,177 issued Nov. 11, 1975; 4,038,261 issued July 26, 1977; and 4,656,231 issued Apr. 7, 1987. The term "poly(arylene sulfide) resin" is used herein to broadly designate arylene sulfide polymers whether homopolymers, copolymers, terpolymers, and the like, or a blend of such polymers. Suitable poly(arylene sulfide) resins can be prepared according to the processes described in the patents cited above. Of the various poly(arylene sulfide) resins which can be utilized, poly(phenylene sulfide) resins are generally preferred. Particularly suitable commercially available poly(phenylene sulfide) resins are those manufactured by Phillips Petroleum Company and marketed as RYTON® poly(phenylene sulfide) resins having melt flows of from about 10 to about 1000 grams per 10 minutes as determined by ASTM D1238, condition 315/5.0.

A particularly preferred poly(arylene sulfide) resin for use in accordance with the present invention is a non-cured poly(phenylene sulfide) resin which by its particular method of production is a high molecular weight, substantially linear polymer having a low ash content and a high melt crystallization temperature. The method of producing the high molecular weight, substantially linear, clean polymer described above generally comprises the steps of reacting an aqueous alkali metal hydroxide solution with an aqueous sodium sulfide solution, adding a molar excess quantity of N-methyl-2-pyrrolidone to the aqueous solution and dehydrating the solution in a known manner. A suitable modifier, e.g., trichlorobenzene or sodium acetate, along with dichlorobenzene are added to the dehydrated solution to produce a polymerizable reaction mixture. The reaction mixture is polymerized in two sequential long-term heating cycles from which solid poly(phenylene sulfide) is recovered and washed whereby the poly(phenylene sulfide) has a desired melt flow within the range of from 50 to 600 grams per 10 minutes as measured by the ASTM test described above, an ash content no greater than 0.1 weight percent and a melt crystallization temperature of not less than 175°C, preferably not less than 190°C.

A specific example of the production of the non-cured high molecular weight, substantially linear, clean poly(phenylene sulfide) resin described above is as follows. An aqueous sodium hydroxide solution is reacted with an aqueous sodium hydrosulfide solution to produce an aqueous sodium sulfide solution. A quantity of N-methyl-2-pyrrolidone is added to the aqueous sodium sulfide solution and the resulting solution is dehydrated in a known manner. A sodium acetate modifier is added to the reaction mixture along with a suitable amount of dichlorobenzene. The resultant reaction mixture is polymerized in two sequential heating cycles that increase the linear molecular weight of the poly(phenylene sulfide) produced in the polymerization. Preferably, the first of the two heating cycles is at a low temperature, e.g., from 200°C to 240°C, and has a duration in the range of from 1 hour to 6 hours. The subsequent high temperature cycle is preferably at a temperature within the range of from 260°C to 270°C and is for a time period in the range of from 1 hour to 4 hours. After the heating cycles are completed, the reaction mixture contains liquid high molecular weight, linear poly(phenylene sulfide) dispersed in N-methyl-2-pyrrolidone.

The poly(phenylene sulfide) is next recovered from the reaction mixture in a solid form by a suitable recovery process such as the water quench recovery process described in U.S. Patent No. 4,415,729 issued on Nov. 15, 1983, the flash recovery process described in U.S. Patent No. 3,956,060 issued on May 11, 1976, a recovery process known as the non-vent flash recovery process and a recovery process known as the N-methyl-2-pyrrolidone quench recovery process. Of these, the N-methyl-2-pyrrolidone quench recovery process is presently preferred.

In carrying out the N-methyl-2-pyrrolidone quench recovery process, the reaction mixture containing liquid poly(phenylene sulfide), after the completion of the second heating cycle, is cooled at a rate of about 1.5°C per minute to about 240°C and then cooled at a rate of about 0.5°C per minute to about 200°C. At approximately 218°C, the high molecular weight, linear poly(phenylene sulfide) solidifies into a granular form as known in the art. Further cooling is continued to reduce pressure within the pressurized reactor as known in the art. At about 120°C, a low molecular weight species of poly(phenylene sulfide), referred to as oligomers, solidify and the remaining liquid tends to become very viscous. To lower the viscosity for facilitating filtering, N-methyl-2-pyrrolidone is added in large quantities such as about 3 to about 5 moles per mole of sulfur present. In the water quench technique water is utilized instead of N-methyl-2pyrrolidone. However, the N-methyl-2-pyrrolidone quench technique is preferred because it also redissolves solidified oligomers whereby solid high molecular weight, linear poly(phenylene sulfide) can be separated from the remaining constituents in the reaction mixture by screening, centrifuging or filtration in a known manner.

The recovered solid poly(phenylene sulfide) is next washed to remove retained filtrate from the polymer as well as to remove ash which includes sodium ions. A preferred washing technique involves two conventional cold water washes using deionized water having a pH in the range of from about 6.5 to about 7.0, after which the polymer is washed with a hot acidic solution having a pH of about 5.5 followed by filtering, followed by washing with hot deionized water having a pH of 6.5 to 7.0 followed by filtering. The hot acidic solution can contain one or more acids such as acetic acid, sulfuric acid or nitric acid, and is at a temperature of about 177°C. The subsequent hot deionized water wash is preferably also carried out at a temperature of about 177°C.

The above-described method results in a poly(phenylene sulfide) resin having a combination of low ash content, i.e., no greater than 0.1 weight percent, a high melt crystallization temperature, i.e., preferably above 190°C, and a melt flow within the range of from 50 to 600 grams per 10 minutes as measured by the above-described ASTM test.

While for purposes of this disclosure, particular recovery and washing techniques have been described, it will be understood by those skilled in the art that other techniques can be utilized including the above-mentioned flash recovery and non-vent flash recovery techniques, water wash recovery techniques, and various other washing and filtering techniques which utilize different wash solutions at different temperatures, etc.

The glass reinforcing material used in the poly(arylene sulfide) composition of this invention can be selected from the group consisting of glass fibers, glass particles and hollow microspheric glass. The preferred glass reinforcing material is glass fibers. While there are a variety of glass fiber reinforcing materials available, those specifically developed for thermoplastic reinforcement applications are the most preferred. One such glass fiber reinforcing material is produced by Owens-Corning Corporation of Toledo, Ohio and marketed under the trade designation of type 497DB, K-filament glass fibers. Other glass fibers which are suitable are those marketed by Owens-Corning Corporation as type 497EE, G-filament and those manufactured by PPG Industries, Inc. of Pittsburgh, Pa. marketed under the trade designation PPG 3090, K-filament. The glass reinforcement material used is generally included in a composition of this invention in an amount in the range of from 10 to 65 parts by weight.

The epoxysilanes which are suitable for use in accordance with the present invention are represented by the formula 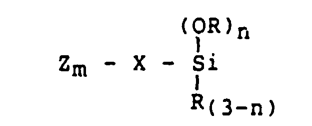 wherein
Z is 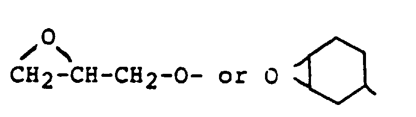
X is a linear or branched alkylene, arylene or arylalkylene hydrocarbon radical having from 1 to 15 carbon atoms,
R is a hydrocarbon radical having from 1 to 8 carbon atoms,
m is an integer of at least 1, and
n is an integer of 1 to 3.

Examples of particularly suitable such epoxysilanes are 3-glycidoxypropyltrimethoxysilane, beta-(3,4-epoxycyclohexyl)-ethyltrimethoxysilane, 3-glycidoxypropylmethyldiethoxysilane, 2-glycidoxypropyltrimethoxysilane and mixtures of the foregoing epoxysilanes. The most preferred epoxysilane is 3-glycidoxypropyltrimethoxysilane which is commercially available from the Union Carbide Corporation under the trade designation UCARSIL™ TC-100 organosilicon chemical.

The epoxysilane is an essential component of the molding compositions of the present invention and must be present therein in a significant quantity as opposed to a minor quantity such as that which results when an epoxysilane is utilized as a sizing on the glass reinforcing material. Generally, the epoxysilane is included in the compositions of the present invention in an effective amount up to 2.0 parts by weight of the composition.

A fourth component which is also included in the compositions of the present invention is a mold corrosion inhibitor. Since poly(arylene sulfide) molding compositions are corrosive in nature, the presence of a mold corrosion inhibitor in the molding compositions preserves the mold and increases its service life. A particularly preferred such corrosion inhibitor is hydrotalcite which can be included in the compositions without adversely affecting the mechanical and other desired properties of the compositions. Hydrotalcite is included in the compositions of this invention in an amount in the range of from 0.1 to 2.0 parts by weight of the composition. A suitable commercially available hydrotalcite is available from the Kyowa Chemical Industry Company, Ltd., Osaka, Japan, under the trade designation DHT-4A.

Fillers in addition to the glass reinforcing material are present in an amount btw. 10 and 65 parts by weight of the composition. Examples are talc, silica, clay, alumina, calcium sulfate, calcium carbonate, mica and the like.

Other additives can optionally be included in the molding compositions of the present invention such as processing aids and pigments. An example of a processing aid is polyethylene which can be present in a composition of the invention in an amount in the range of from 0.1 to 1.0 parts by weight of the composition. An example of a pigment which can be used to impart a black color to the molding composition is carbon black. As will be understood, the optional additives utilized should be compatible with the molding composition by not adversely affecting the mechanical and other desired properties of the composition and products molded therewith.

A preferred composition of the present invention is comprised of poly(arylene sulfide) resin present in the composition in an amount in the range of from 50 to 75 parts by weight of the composition, glass reinforcing material present in an amount in the range of from 25% to 50 parts by weight and an epoxysilane selected from the group consisting of 3-glycidoxypropyltrimethoxysilane, beta-(3,4-epoxycyclohexyl)-ethyltrimethoxysilane, 3-glycidoxypropyl-methyldiethoxysilane, 2-glycidoxypropyltrimethoxysilane and mixtures of the foregoing epoxysilanes, present in an amount in the range of from 0.2 to 1.5 parts by weight. Furthermore the composition contains an additional filler and hydrotalcite in the above mentioned range.

A more preferred composition of this invention is compprised of poly(phenylene sulfide) resin present in the composition in an amount in the range of from 55 to 65 parts by weight of the composition, glass fiber reinforcing material present in an amount of from 35 to 45 parts by weight, 3-glycidoxypropyltrimethoxysilane present in an amount of from 0.4 to 1.0 parts by weight and hydrotalcite present in an amount from 0.8 to 1.2 parts by weight. An additional filler is present in the above mentioned range.

A particularly preferred composition of this invention is comprised of non-cured poly(phenylene sulfide) resin having an ash content of not greater than 0.1 weight percent, a melt crystallization temperature of not less than about 175°C and a melt flow within the range of from 50 to 600 grams per 10 minutes, most preferably from 50 to 200 grams per 10 minutes, present in the composition in an amount in the range of from 35 to 90 parts by weight of the composition; glass fiber reinforcing material present in an amount of from 10 to 65 parts by weight; at least one epoxysilane present in an amount in the range of from 0.1 to 2.0 parts by weight; an additional filler present in an amount in the range of from 10 to 65 parts by weight; and hydrotalcite present in an amount between 01and 2 parts by weight.

The most preferred composition of this invention is comprised of non-cured poly(phenylene sulfide) resin having an ash content of not greater than 0.1 weight percent, a melt crystallization temperature of not less than 190°C and a melt flow within the range of from 50 to 200 grams/10 minutes, present in said composition in an amount in the range of from 55 to 65 parts by weight of the composition; glass fibers present in an amount of from 35 to 45 parts; 3-glycidoxypropyltrimethoxysilane present in an amount of from 0.4 to 1.0 parts by weight; hydrotalcite present in an amount of from 0.8 to 1.2 parts by weight; an additional filler present in an amount of 10 to 65 parts by weight. The above-described composition is light-colored and has an outstanding combination of mechanical strength, impact resistance, electrical insulation resistance and hydrolytic stability.

In preparing the molding compositions of this invention, the glass reinforcing material can be mixed with the epoxysilane, hydrotalcite and other additives to form a substantially homogeneous mixture followed by combining the poly(arylene sulfide) resin used therewith to form a mixture of the composition components. The composition component mixture is mixed sufficiently to form a substantially homogeneous mixture which is then melt-extruded and cooled to form a molding composition.

In an alternate technique, the components of the composition can be combined in a mixer and mixed simultaneously to form a substantially homogeneous mixture of the composition components followed by melt-extruding the mixture and cooling it to form the resin composition.

In order to further illustrate the molding compositions and methods of the present invention, the following examples are given.

### Example 1

This example demonstrates the improvement in flexural strength, tensile strength, elongation and impact resistance of glass-filled poly(phenylene sulfide) resin (hereinafter 5 PPS) compositions containing increasing quantities of epoxysilane.

The test procedure for Run 1 was as follows.

A mixture of 1292.5 grams PPS (non-cured trichlorobenzene modified in accordance with U.S. Patent No. 4,038,261, melt flow 78 grams per 10 minutes measured in accordance with ASTM D1238, condition 315/5.0), 880 grams glass fiber (G-filament furnished by Owens-Corning Fiberglas Corporation, Toledo, Ohio ), 5.5 grams of high density polyethylene (BX670 Phillips Petroleum Company, density 0.965 minimum, melt index 27-33 grams/10 minutes), and 22 grams of a hydrotalcite (DHT-4A Kyowa Chemical Industry Company) were dry blended and extruded through a Davis-Standard extruder, 1.5 inch diameter and 24:1 L:D ratio at a temperature in the range of 315°C (600°F) to about 333°C (630°F). A metering screw with 3:1 compression ratio was used at 80 rpm. The melt was extruded through a strand die, and chopped into coarse granules. The granules were heated in a forced-air oven at 150°C (302°F) for 2 hours just before molding.

The above procedure was repeated except that a portion of the PPS of Run 1 was replaced with various quantities of the epoxysilane, 3-glycidoxypropyltrimethoxysilane (UCARSIL®TC-100, Union Carbide Corporation) to maintain the total weight of the mixture constant and to yield the compositions for Runs 3, 6 and 7.

For Run 2 the ingredients of the compositions were 1405.2 grams of the PPS (as described above), 960 grams G-filament glass, 6 grams BX670 polyethylene, 24 grams DHT-4A, and 4.8 grams TC-100 silane. In Runs 4 and 5 a portion of the PPS of Run 2 was replaced with TC-100 silane to yield compositions containing 0.4 and 0.6 weight parts silane based on the total weight of the composition.

Test specimen bars prepared from each of the compositions were tested with the results shown in Table I Runs 1-7. Flexural strength was measured by ASTM D790; tensile strength and elongation by ASTM D638; and impact resistance (Izod) by ASTM D256. The injection pressure required mold the test bars in an Arburg 221E/170R tended to increase with increasing silane level and roughly correlates with improvement noted in mechanical properties. The mold temperature was about 135°C (275°F). The molded specimens were heated at 200°C (392°F) for 2 hours and then cooled to room temperature before testing.

**TABLE I**

| Effect of Epoxysilane Loading on Properties | | | | | | | | |
|---|---|---|---|---|---|---|---|---|
| | Run | | | | | | | |
| | 1 | 2 | 3 | 4 | 5 | 6 | 7 | |
| Epoxysilane, Wt% | 0 | 0.2 | 0.4 | 0.4 | 0.6 | 0.8 | 1.2 | |
| Flexural Strength, | 28.6 | 30.0 | 32.2 | 32.7 | 36.3 | 35.6 | 39.4 | KSI |
| | 437 | 4.65 | 4.99 | 5.07 | 5.63 | 5.52 | 6.11 | kg/cm² |
| Tensile Strength, | 19.1 | 19.4 | 22.2 | 23.4 | 24.8 | 24.6 | 26.7 | KSI |
| | 2.96 | 3.01 | 3.44 | 3.63 | 3.84 | 3.81 | 4.14 | kg/cm² |
| Elongation, | 2.7 | 2.7 | 3.3 | 3.4 | 3.6 | 4.6 | 3.8 | % |
| Izod Impact Resistance unnotched | 5.8 | 6.2 | 6.3 | 7.0 | 6.8 | 7.2 | 9.9 | ftlb/in |
| | 1.06 | 1.13 | 1.15 | 1.28 | 1.24 | 1.32 | 1.81 | kg |
| Injection Pressure, | 500 | - | 500 | - | - | 700 | 850 | psig |
| | 72.5 | - | 72.5 | - | - | 101.5 | 123.3 | kPa |

Runs 1-7 demonstrate a gradual improvement in the flexural strength, tensile strength and impact resistance as the amount of epoxysilane incorporated into the mixture increases.

### Example 2

This example demonstrates the unexpected improvement in physical properties of a glass-filled poly(phenylene sulfide) composition containing an epoxysilane compound according to this invention, as compared to otherwise identical compositions varying only in the type of organosilane present.

The compositions of Runs 9-12 were prepared similarly to Run 4 of Example 1, with 9.6 grams of each organosilane being added to 960 grams K-filament chopped strand glass, 0,32 cm (1/8-inch) in length (Owens-Corning OC 497DB) and mixed in a plastic bag. The PPS and other ingredients were added to the bag and mixed to yield compositions containing 0.4 weight percent of organosilane based on the weight of the total composition. The mixtures were pelletized and test specimens injection molded as in Example 1. As shown in Table II, Runs 8-12, the composition containing the epoxysilane had significantly high flexural strength as well as improved tensile strength and impact resistance as compared to the other compositions tested.

**TABLE II**

| Effect of Organosilanes on Properties | | | | | |
|---|---|---|---|---|---|
| | | Run | | | |
| | 8 | 9 | 10 | 11 | 12 |
| Organosilane | None | epoxy-silane^{a} | Xl-6106^{b} | Y-9872^{c} | Y-9194^{d} |
| Flexural Strength, Kg/cm² | 4,22 | 5,67 | 4,73 | 4,42 | 4,73 |
| (KSI | 27.2 | 36.6 | 30.5 | 28.5 | 30.5) |
| Tensile Strength, Kg/cm² | 3,25 | 3,69 | 3,29 | 3,38 | 3,58 |
| (KSI | 21.0 | 23.8 | 21.2 | 21.8 | 23.1) |
| Izod Impact Resistance, (ft-lb/in | 0,67 | 0,84 | 0,74 | 0,68 | 0,61 |
| unnotched KPa | 4.6 | 5.8 | 5.1 | 4.7 | 4.2) |

| | | | | | |
|---|---|---|---|---|---|
| ^{a} TC-100, 3-glycidoxypropyltrimethoxysilane, Union Carbide Corporation | | | | | |
| ^{b}Xl-6106, organotrimethoxysilane containing formaldehyde, Dow Corning Corporation | | | | | |
| ^{c}Y-9872, Union Carbide Corporation | | | | | |
| ^{d}Y-9194, Organofunctional Polysulfide Silane, Union Carbide Corporation, See U.S. 4,504,551. | | | | | |

### Example 3

This example further demonstrates unexpected improvement in physical properties in glass-filled poly(arylene sulfide) compositions of this invention using three different sources of epoxysilane containing the same active ingredient.

The compositions of Runs 14-16 were prepared as described above with 24 grams of each epoxysilane, 1738.5 grams PPS (melt flow rate 52 g/10 min.), 1200 grams OC 497 glass fiber, 30 grams DHT-4A hydrotalcite, and 7.5 grams polyethylene (Marlex TR161, high density polyethylene density 0.965, melt index about 30 grams/10 minutes, Phillips Petroleum Company). The comparative composition of Run 13 was prepared without epoxysilane by substituting PPS therefor. The compositions of Runs 17 and 18 were prepared as in Run 3 of Example 1, with substitution of the BX605 polyethylene for BX670 and a mixture of organosilanes in Run 18. Each composition (except Run 13) contains 0.8 weight percent organosilane based on the weight of the total composition. The results are given in Table III below.

**TABLE III**

| Effect of Epoxysilane Source on Properties | | | | | | |
|---|---|---|---|---|---|---|
| | Run | | | | | |
| | 13 | 14 | 15 | 16 | 17 | 18 |
| Organosilane | None | TC-100^{a} | Z-6040^{b} | A-187^{c} | Y-9194^{d} | TC-100^{e} Y-9194 |
| Flexural Strength Kg/cm² | 3,80 | 5,55 | 5,46 | 5,81 | 4,06 | 4,90 |
| (KSI | 24.5 | 35.8 | 35.2 | 37.5 | 26.2 | 31.6) |
| Tensile Strength Kg/cm² | 2,79 | 3,61 | 3,58 | 3,67 | 2,71 | 3,01 |
| (KSI | 18.0 | 23.3 | 23.1 | 23.7 | 17.5 | 19.4) |
| Izod Impact Resistance, (ft-lb/in unnotched | 4.8 | 5.8 | 6.2 | 6.8 | 5.1 | 6.3) |
| KPa | 0,70 | 0,84 | 0.90 | 0,99 | 0,74 | 0,91 |

| | | | | | | |
|---|---|---|---|---|---|---|
| ^{a}TC-100, 3-glycidoxypropyltrimethoxysilane, Union Carbide Corporation | | | | | | |
| ^{b}Z-6040, 3-glycidoxypropyltrimethoxysilane, Dow Corning Corporation | | | | | | |
| ^{c}A-187, 3-glycidoxypropyltrimethoxysilane, Union Carbide Corporation | | | | | | |
| ^{d}Y-9194, Organofunctional Polysulfide Silane, Union Carbide Corporation, See U.S. 4,504,551. | | | | | | |
| ^{e}0.4 weight % each of TC-100 and Y-9194 | | | | | | |

### Example 4

The poly(phenylene sulfide) used was a RYTON®PR-06 (Phillips Petroleum Company) with a melt flow rate of 120± 20g/10 minutes. In a run illustrating the effect of the epoxysilane TC-100, 0.8 weight percent was added to CC 497 glass fibers, the PPS, and BX 605 polyethylene resin to produce the compositions listed in Table IV below.

**TABLE IV**

| Effect of Specific Epoxysilane on Properties | | |
|---|---|---|
| | Run | |
| | 19 | 20 |
| PPS, Wt. % | 59.75 | 58.95 |
| Glass, Wt. % | 40 | 40 |
| Polyethylene, Wt. % | 0.25 | 0.25 |
| Epoxysilane, Wt. % | -- | 0.8 |
| Melt Flow Rate g/10 min. | 40 | 3 |
| Flexural Modulus, (MSI)/m/cm² | (2.1)/0,33 | (2.2)/0,34 |
| Flexural Strength, (KSI) kg/cm² | (28.3)/4,39 | (30.9)/4,79 |
| Tensile Strength, (KSI) kg/cm² | (18.6)/2,88 | (20.1)/3,12 |
| Relative Elongation, % | 2.6 | 3.0 |
| Izod Impact Resistance, (ft-lb/in)/kg unnotched | (6.0)/1,10 | (6.2)/1,13 |

The composition containing the epoxysilane (Run 20) demonstrates improved flexural and tensile properties as compared to the composition without the epoxysilane (Run 19).

### Example 5

This example involves compositions containing a hydrotalcite corrosion inhibitor, DHT-4A, in addition to G-filament glass, BX605 polyethylene (PE) resin, cured PPS, and varying amounts of epoxysilane TC-100. The PPS, RYTON® PR-06 was recovered by the water quench recovery process described in U.S. Patent 4,415,729 or the flash recovery process described in U.S. Patent 3,956,060. The results are summarized in Table V.

**TABLE V**

| Effect of Recovery Process on Properties | | | | | |
|---|---|---|---|---|---|
| | Run | | | | |
| | 21 | 22 | 23 | 24 | 25 |
| | Water Quench Recovered PPS | | | Flash Recovered PPS | |
| PPS | 58.75 | 57.95 | 57.55 | 58.75 | 57.95 |
| Glass | 40 | 40 | 40 | 40 | 40 |
| Hydrotalcite Inhibitor | 1 | 1 | 1 | 1 | 1 |
| PE Resin | 0.25 | 0.25 | 0.25 | 0.25 | 0.25 |
| Epoxysilane TC-100 | --- | 0.8 | 1.2 | --- | 0.8 |
| Flexural Modulus, (MSI)/m/cm² | (2.1)/0,33 | (2.2)/0,34 | (2.2)/0,34 | (2.2)/0,34 | (2.3)/0,36 |
| Flexural Strength, (KSI)Kg/cm² | (33.8)5,24 | (37.6)5,83 | (37.5)5,80 | (33.5)5,19 | (36.7)5,69 |
| Tensile Strength, (KSI)kg/cm² | (22.5)3,49 | (24.4)3,78 | (26.5)4,11 | (23.0)3,56 | (24.4)3,78 |
| Relative Elongation, % | 3.4 | 3.8 | 4.0 | 3.3 | 3.7 |

| Izod Impact Resistance, (ft-lb/in)/Kg | | | | | |
|---|---|---|---|---|---|
| Notched | (1.9)/0,35 | (2.0)/0,37 | (2.1)/0,38 | (1.9)/0,35 | (2.0)/0,37 |
| Unnotched | (6.7)/1,22 | (7.6)/1,39 | (8.1)9,48 | (7.4)/1,35 | (8.3)/1,52 |

The data of Table V illustrate that the PPS recovery process does not affect the property enhancing effect of the epoxysilane and that increasing its percentage further enhances the tensile and impact properties, whereas the flexural properties are unaffected after an initial presence of the epoxysilane.

### Example 6

In this example the recovery process used for non-cured PPS is shown to influence the mechanical properties of the glass-filled PPS compositions. The incorporation of epoxysilane according to this invention in the compositions improves the mechanical properties further. The results are summarized in Table VI below.

**TABLE VI**

| Effect of Non-Cured PPS Recovery Process on Properties | | | | | |
|---|---|---|---|---|---|
| | Run | | | | |
| | 26 | 27 | 28 | 29 | 30 |
| | Water Quench Recovered PPS | | | Flash Recovered PPS | |
| Melt Flow Rate, g/10 min. | 55 | 55 | 78^{a} | 51 | 51 |
| Epoxysilane | 0 | 0.8 | 0.8 | 0 | 0.8 |

| Property | | | | | |
|---|---|---|---|---|---|
| Flexural Strength, (KSI)/kg/cm² | (29.0)/4,49 | (39.0)/6,04 | (39.8)/6,17 | (26.9)/4,17 | (34.2)/5,30 |
| Tensile Strength, (KSI)kg/cm² | (19.5)/3,02 | (24.1)/3,74 | (26.0)4,03 | (17.1)/2,65 | (21.2)/3,29 |
| Relative Elongation, % | 2.9 | 3.7 | 4.1 | 2.5 | 3.1 |
| Izod Impact Resistance, (ft-lb/in)/Kg,unnotched | (7.8)/1,43 | (9.9)/1,81 | (9.3)/1,70 | (5.5)/1.01 | (8.2)/1,50 |
| Insulation Resistance Ohms | 6x10⁹ | 2x10¹⁰ | 4x10⁸ | 6x10⁶ | 7x10⁶ |

| | | | | | |
|---|---|---|---|---|---|
| ^{a}PPS contacted with aqueous solution containing calcium ions during recovery. | | | | | |

Non-cured PPS recovered by a water quench process produces glass-filled compositions having improved physical properties as compared to compositions from non-cured PPS recovered by a flash process (Runs 27 versus 30). The incorporation of the epoxysilane, TC-100, improves the mechanical properties of each composition further with the water quench recovered PPS containing composition (Run 27) yielding both the larger absolute and relative increase in flexural modulus. A water quench recovered, non-cured PPS that was contacted with an aqueous solution containing calcium ions during the final recovery steps yielded a composition (Run 28) that demonstrated similar improvement in mechanical properties as a composition containing non-calcium treated PPS, Run 27.

### Example 7

This example shows that the type of reinforcement agent incorporated into the PPS compositions makes a difference in the response of physical properties to organosilanes.

The compositions of Runs 31-35 were prepared by mixing organosilane with unsized, milled glass (microglass 3080 Henry & Frick 35 Scotland Blv., P.O. Box 608, Bridgewater, MA 02324) in a Henchel mixer before the addition of the PPS (cured, melt flow rate 115-155 grams/10 minutes, containing 1.7 weight percent lithium carbonate and 0.4 weight percent high density polyethylene).

Compositions of Runs 36-38 also contain 1 weight percent of hydrotalcite, DHT 4A, and 0.25 weight percent of BX605 polyethylene. In Runs 36 and 37, PPS Industries 3090 glass fiber, K-filament chopped strand, 0,32 cm (1/8 inch) length, was used as the reinforcing agent. The results are summarized in Table VII below.

**TABLE VII**

| Effect of Glass Type on Properties | | | | | | | | | |
|---|---|---|---|---|---|---|---|---|---|
| | Run | | | | | | | | |
| | 31 | 32 | 33 | 34 | 35 | 36 | 37 | 38 | |
| Component, | Microglass 3080 | | | | | PPG 3090 | | OC497DB | |
| PPS | 60 | 59.2 | 59.6 | 59.6 | 59.6 | 58.75 | 57.75 | 57.75 | Wt% |
| Glass | 40 | 40 | 40 | 40 | 40 | 40 | 40 | 40 | Wt% |

| Silane^{a} | | | | | | | | | |
|---|---|---|---|---|---|---|---|---|---|
| X1-6106 | - | 0.8 | 0.4 | - | - | - | - | | |
| TC-100 | - | - | - | 0.4 | - | - | 1.0 | 1.0 | |
| Y-9194 | - | - | - | - | 0.4 | - | - | - | g/10 min. |
| Melt Flow Rate | 37 | 0.3 | 3.6 | 12 | 2.8 | - | - | - | |
| Flexural Strength, | 12.9 | 14.6 | 14.4 | 13.7 | 15.7 | 27.7 | 37.9 | 37.6 | KSI |
| | 2.00 | 2.26 | 2.23 | 2.12 | 2.43 | 4.29 | 5.87 | 5.83 | kg/cm² |
| Tensile Strength | 8.1 | 8.3 | 10.7 | 9.0 | 10.0 | 20.5 | 23.8 | 23.8 | KSI |
| | 1.26 | 1.29 | 1.66 | 1.39 | 1.55 | 3.18 | 3.69 | 3.69 | kg/cm² |
| Izod Impact Resistance, unnotched | 1.4 | 1.6 | 1.8 | 1.6 | 1.7 | 7.2 | 8.6 | 8.5 | ft-lb/in |
| | 0.26 | 0.29 | 0.33 | 0.29 | 0.31 | 1.32 | 1.57 | 1.55 | kg |

| | | | | | | | | | |
|---|---|---|---|---|---|---|---|---|---|
| ^{a} See Footnotes Table II | | | | | | | | | |

### Example 8

This example shows that carbon fiber reinforcement in a PPS composition hindered the effectiveness of the epoxysilane to modify physical properties.

The composition of Run 39 was prepared similarly to the procedure described in Example 1 using 2070 grams of PPS (melt flow rate 20-65 g/10 min., trichlorobenzene modified), 900 grams of Panex carbon fiber 30 055/52 (Stackpole Fibers Co. Inc., Foundry Industrial Park, Lowell, MA 01852), and 30 grams of low density polyethylene resin (AC-6A Allied Chemical). A portion of the PPS was replaced by 12 grams of the epoxysilane TC-100 to yield the composition of Run 40. The epoxysilane was added to a portion of the PPS in a Henchel mixer before the final composition of Run 40 was prepared. The properties of the two compositions are compared in Table VIII below.

**TABLE VIII**

| Effect of Carbon Fibers on Properties | | |
|---|---|---|
| | Run | |
| | 39 | 40 |
| | Control | Comparison |
| Melt Flow Rate, g/10 min. | 15 | 13 |
| Flexural Strength, (KSI)/Kg/cm² | (31.9)/4,94 | (31.8)/4,93 |
| Tensile Strength, (KSI) kg/cm² | (20.5)/3,18 | (21.1)/3,27 |
| Elongation, % | 1.9 | 2.1 |
| Izod Impact Resistance, (ft-lb/in)/kg unnotched | (5.5)/1,01 | (5.7)/1,04 |

The composition using the epoxysilane (Run 40) shows no alteration in melt flow rate as compared to the control Run 39. Organosilanes are known to be melt flow rate reducing ingredients of glass-filled PPS compositions. The mechanical properties were unaffected by the epoxysilane.

### Example 9

The effectiveness of epoxysilane as compared to two other organosilanes to enhance the mechanical and insulation properties is demonstrated further in this example. The PPS used in these compositions was uncured having melt flow rate of 220 ± 16 grams/10 minutes. Each organosilane was present at 0.4 weight percent based on the total weight of the composition. Each composition comprised 57.1 weight percent PPS, 40 weight percent Owens-Corning OC 394A Fiberglas, 1 weight percent each of low density polyethylene AC-6A and DHT-4A, and 0.5 weight percent carbon black (SB-4, Degussa). The results are compared in Table IX below.

**TABLE IX**

| Effect of Organosilanes on Physical Properties | | | |
|---|---|---|---|
| | Run | | |
| | 41 | 42 | 43 |
| Organosilane | TC-100^{a} | Xl-6106^{a} | 1506^{b} |
| Flexural Strength, (KSI)/Kg/cm² | (29.7)/4,60 | (26.5)/4,11 | (25.5)/3,95 |
| Tensile Strength, (KSI)/Kg/cm² | (18.3)/2,84 | (18.4)/2,85 | (17.6)/2,73 |
| Izod Impact Resistance, (ft-lb/in/Kg) Unnotched | (5.7)/1,04 | (5.3)/0,97 | (4.6)/0,84 |
| Insulation Resistance, Ohms | 7x10¹⁰ | 4x10¹⁰ | 3x10¹² |

| | | | |
|---|---|---|---|
| ^{a}See Footnotes Table II | | | |
| ^{b}Dynasylan 1506, gamma-aminopropylmethyldiethyoxysilane, Kay-Fries, Inc., Stony Point, NY 10980. | | | |

The composition of this invention containing epoxysilane (Run 41) has a flexural strength at least 10% greater than the compositions of Runs 42 and 43 containing two other organosilanes. Impact resistance as measured by unnotched Izod and flexural strength are the highest for the epoxysilane composition.

### Example 10

In this example, the recovery and wash process used for the non-cured PPS tested was N-methyl-2-pyrrolidone (NMP) quench and acid wash (Runs 44-47) except for one test (Run 47) which substituted a flash recovered PPS with acid wash for comparison purposes. The results of these tests are given in Table X below.

**TABLE X**

| Effect of Non-Cured PPS Recovered by NMP Quench and Acid Wash on Physical Properties | | | | |
|---|---|---|---|---|
| | Run | | | |
| | 44 | 45 | 46 | 47 |
| Composition Components | | | | |
| Non-Cured PPS, ^{a} Wt % | 57.95 | 57.95 | 57.95 | 57.95 |
| (PPS melt flow, g/10 min.) | (300) | (200) | (200) | (190) |
| (Ash Content, Wt %) | (0.02) | (0.06) | (0.06) | (0.18) |
| (Melt Crystallization Temp., °C) | (203) | (167) | (167) | (165) |
| Glass, Wt % | 40^{b} | 40^{b} | 40^{c} | 40^{c} |
| Hydrotalcite^{d}, Wt % | 1.0 | 1.0 | 1.0 | 1.0 |
| Polyethylene^{e}, Wt % | 0.25 | 0.25 | 0.25 | 0.25 |
| Epoxysilane^{f}, Wt % | 0.8 | 0.8 | 0.8 | 0.8 |

| Physical Properties | | | | |
|---|---|---|---|---|
| Rapid Melt Crystallization Temp., °C | 176 | 145 | 142 | 147 |
| Flexural Strength, (KSI)/Kg/cm² | (38.9)/6,03 | (37.6)/5,83 | (34.7)/5,38 | (32.1)/4,98 |
| Tensile Strength, (KSI) Kg/cm² | (30.5)4,73 | (29.1)/4,51 | (24.8)/3,84 | (21.8)/3,38 |

| Izod Impact Resistance, (ft-lb/in)/Kg, | | | | |
|---|---|---|---|---|
| notched | (1.9)/0,35 | (1.8)/0,33 | (1.7)/0,31 | (1.4)/0,26 |
| unnotched | (15.1)/2,76 | (12.4)/2,27 | (11.5)/2,10 | (9.1)/1,66 |

| Hydrolytic Stability^{g} (Aged (150 hr/250°F/15 psig)/150 h/121°C/2,17 KPa)H₂O | | | | |
|---|---|---|---|---|
| Aged Tensile, (KSI)(Kg/cm² | (17.9)/2,77 | (16.0)/2,98 | (14.2)/2,20 | (14.0)/2,17 |

| | | | | |
|---|---|---|---|---|
| ^{a}Sodium acetate modified | | | | |
| ^{b}Owens-Corning G-filament | | | | |
| ^{c}Owens-Corning K-filament | | | | |
| ^{d}Kyowa Chemical Industrial Company DHT-4A | | | | |
| ^{e}Phillips Petroleum Company BX605 | | | | |
| ^{f}Union Carbide Corporation TC-100 | | | | |
| ^{g}Measured in accordance with ASTM D638 | | | | |

From Table X it can be seen that the use of PPS recovered by NMP quench and washed with acid having an ash content less than 0.1 weight percent, a melt crystallization temperature greater than 190°C and a melt flow rate above 50 g/10 min. results in compositions having excellent physical properties.

Run 44 demonstrates that the use of PPS having a low ash content and high melt crystallization temperature results in a composition having excellent physical properties. The composition of Run 45 wherein the PPS used had a lower melt crystallization temperature and higher ash content exhibited good physical properties, but not as good as the composition of Run 44. The compositions of Runs 44 and 45 both included Owens-Corning G-filament glass.

A comparison of Runs 46 and 47, both compositions of which included Owens-Corning K-filament glass, clearly shows that the use of PPS having a low ash content results in a composition having better physical properties.

The present invention, therefore, is well adapted to carry out the objects and attain the ends and advantages mentioned as well as those inherent therein.

## Claims

1. A composition comprising:
35 - 90 parts by weight poly(arylene sulfide)
10 - 65 parts by weight of glass
0.1 - 2 parts by weight of epoxysilane
10 - 65 parts by weight of an additional filler
0.1 - 2 parts by weight of hydrotalcite.

2. The composition of claim 1 comprising 0.4 - 1 parts by weight of epoxysilane.

3. The composition of claim 1 or 2 comprising:
55 - 65 parts by weight poly(arylene sulfide),
35 - 45 parts by weight of glass,
0.4 - 1 parts by weight of epoxysilane,
10 - 65 parts by weight of an additional filler,
0.1 - 2 parts by weight of hydrotalcite.

4. The composition of one of claims 1 to 3 comprising 0.8 - 1.2 parts by weight of hydrotalcite.

5. The composition of one of claims 1 to 4 wherein said poly(arylene sulfide) is poly(phenylene sulfide).

6. The composition of one of claims 1 to 5 wherein said epoxysilane is selected from the group consisting of 3-glycidoxypropyltrimethoxysilane, beta-(3,4-epoxycyclohexyl)-ethyltrimethoxysilane, 3-glycidoxypropylmethyldiethoxysilane, 2-glycidoxypropyltrimethoxysilane and mixtures of the foregoing compounds.

7. The composition of claim 6 wherein said epoxysilane is 3-glycidoxypropyltrimethoxysilane.

8. The composition of one of claims 1 to 7 wherein said additional filler is selected from the group consisting of talc, silica, clay, alumina, calcium sulfate, calcium carbonate, mica and mixtures thereof.

9. The composition of claim 8 wherein said additional filler is selected from the group consisting of calcium sulfate and talc.

10. A method of preparing a thermoplastic molding composition comprising the steps of:
- mixing the ingredients of the compositions of one of the claims 1 to 9 to form a substantially homogenous mixture, weight parts each based on the total of the composition;
- melt extruding and cooling said mixture.

11. The method of claim 10 comprising the steps of:
- mixing glass with epoxysilane as defined in one of claims 1 to 9 to form a substantially homogenous first composition,
- mixing with said first composition poly(arylene sulfide) resin as defined in one of claims 1 to 9 to form a substantially homogenous second composition and melt extruding and cooling said second composition to form a molding composition, weight parts each based on the total weight of the composition; and
- melt extruding and cooling said mixture.

## Patentansprüche

1. Zusammensetzung, enthaltend:
35-90 Gew.-Teile Poly-(arylensulfid),
10-65 Gew.-Teile Glas,
0,1-2 Gew.-Teile Epoxysilan,
10-65 Gew.-Teile eines zusätzlichen Füllstoffs und
0,1-2 Gew.-Teile Hydrotalcit.

2. Zusammensetzung nach Anspruch 1, enthaltend 0,4-1 Gew.-Teile Epoxysilan.

3. Zusammensetzung nach Anspruch 1 oder 2, enthaltend:
55-65 Gew.-Teile Poly-(arylensulfid),
35-45 Gew.-Teile Glas,
0,4-1 Gew.-Teil Epoxysilan,
10-65 Gew.-Teile eines zusätzlichen Füllstoffs und
0,1-2 Gew.-Teile Hydrotalcit.

4. Zusammensetzung nach einem der Ansprüche 1 bis 3, enthaltend 0,8-1,2 Gew.-Teile Hydrotalcit.

5. Zusammensetzung nach einem der Ansprüche 1 bis 4, wobei es sich beim Poly-(arylensulfid) um Poly-(phenylensulfid) handelt.

6. Zusammensetzung nach einem der Ansprüche 1 bis 5, wobei das Epoxysilan aus der Gruppe 3-Glycidoxypropyltrimethoxysilan, β-(3,4-Epoxy-cyclohexyl)-ethyltrimethoxysilan, 3-Glycidoxypropylmethyldiethoxysilan, 2-Glycidoxypropyltrimethoxysilan und Gemische der vorgenannten Verbindungen ausgewählt ist.

7. Zusammensetzung nach Anspruch 6, wobei es sich beim Epoxysilan um 3-Glycidoxypropyltrimethoxysilan handelt.

8. Zusammensetzung nach einem der Ansprüche 1 bis 7, wobei der zusätzliche Füllstoff aus der Gruppe Talcum, Siliciumdioxid, Ton, Aluminiumoxid, Calciumsulfat, Calciumcarbonat, Glimmer und Gemische davon ausgewählt ist.

9. Zusammensetzung nach Anspruch 8, wobei der zusätzliche Füllstoff aus der Gruppe Calciumsulfat und Talcum ausgewählt ist.

10. Verfahren zur Herstellung einer thermoplastischen Formmasse, umfassend folgende Stufen:
- Vermischen der Bestandteile der Zusammensetzungen von einem der Ansprüche 1 bis 9 unter Bildung eines im wesentlichen homogenen Gemisches, wobei sich die Gewichtsteile jeweils auf die gesamte Zusammensetzung beziehen;
- Schmelzextrudieren und Abkühlen des Gemisches.

11. Verfahren nach Anspruch 10, umfassend folgende Stufen:
- Vermischen von Glas mit Epoxysilan gemäß einem der Ansprüche 1 bis 9 unter Bildung einer im wesentlichen homogenen ersten Zusammensetzung;
- Vermischen eines Poly-(arylensulfid)-Harzes gemäß der Definition in einem der Ansprüche 1 bis 9 mit der ersten Zusammensetzung unter Bildung einer im wesentlichen homogenen zweiten Zusammensetzung und Schmelzextrudieren und Abkühlen der zweiten Zusammensetzung unter Bildung einer Formmasse, wobei sich die Gewichtsteile jeweils auf das Gesamtgewicht der Zusammensetzung beziehen; und
- Schmelzextrudieren und Abkühlen des Gemisches.

## Revendications

1. Une composition comprenant :
35 à 90 parties en poids de poly(sulfure d'arylène)
10 à 65 parties en poids de verre
0,1 à 2 parties en poids d'époxysilane
10 à 65 parties en poids d'une charge supplémentaire
0,1 à 2 parties en poids d'hydrotalcite.

2. La composition selon la revendication 1 comprenant 0,4 à 1 partie en poids d'époxysilane.

3. La composition selon la revendication 1 ou 2 comprenant :
55 à 65 parties en poids de poly(sulfure d'arylène),
35 à 45 parties en poids de verre,
0,4 à 1 partie en poids d'époxysilane,
10 à 65 parties en poids d'une charge supplémentaire.
0,1 à 2 parties en poids d'hydrotalcite.

4. La composition selon l'une des revendications 1 à 3 comprenant 0,8 à 1,2 parties en poids d'hydrotalcite.

5. La composition selon l'une des revendications 1 à 4, dans laquelle ledit poly(sulfure d'arylène) est le poly(sulfure de phénylène).

6. La composition selon l'une des revendications 1 à 5, dans laquelle ledit époxysilane est choisi parmi le groupe comprenant le 3-glycidoxypropyltriméthoxysilane, le β-(3,4-époxycyclohexyl)-èthyltriméthoxysilane, le 3-glycidoxypropylméthyldiéthoxysilane, le 2-glycidoxy-propyltriméthoxysilane et les mélanges des composés précédents.

7. La composition selon la revendication 6, dans laquelle ledit époxysilane est le 3-glycidoxypropyl-trimèthoxysilane.

8. La composition selon l'une des revendications 1 à 7, dans laquelle ladite charge supplémentaire est choisie parmi le groupe comprenant le talc, la silice, l'argile, l'alumine, le sulfate de calcium, le carbonate de calcium le mica et leurs mélanges.

9. La composition selon la revendication 8, dans laquelle ladite charge supplémentaire est choisie parmi le groupe comprenant le sulfate de calcium et le talc.

10. Un procédé de préparation d'une composition de moulage thermoplastique comprenant les étapes consistant à :
- mélanger les ingrédients des compositions selon l'une des revendications 1 à 9 pour former un mélange essentiellement homogène, les parties en poids étant basées chacune sur le poids total de la composition ;
- extruder par fusion et refroidir ledit mélange.

11. Le procédé selon la revendication 10 comprenant les étapes consistant à :
- mélanger du verre avec de l'époxysilane comme défini dans l'une des revendications 1 à 9 pour former une première composition essentiellement homogène,
- mélanger avec ladite première composition une résine de poly(sulfure d'arylène) comme défini dans l'une des revendications 1 à 9 pour former une seconde composition essentiellement homogène et extruder par fusion et refroidir ladite deuxième composition pour former une composition de moulage, les parties en poids étant basées chacune sur le poids total de la composition, et
- extruder par fusion et refroidir ledit mélange.
